# EUROPEAN PATENT APPLICATION

(11) **EP 1 420 600 A1**
(43) Date of publication of application: **19.05.2004**
(21) Application number: 03291753.6
(22) Date of filing: 15.07.2003
(51) Int. Cl.: H04Q 7/22

(54) **Firewall system for mobile telecommunications devices**

(30) Priority: 15.11.2002 EP 02292856
(71) Applicant: SCHLUMBERGER Systèmes, 92120 Montrouge (FR)
(72) Inventor: Lambert, Jean-Marc, c/o Schlumberger Systèmes, B.P. 620-12 92542 Montrouge Cédex (FR)
(74) Representative: Gabriel, Franck

(57) **Abstract**

A subscriber identity module SIM is adapted to be inserted into a mobile telecommunication device. SIM comprises a firewall system for screening the messages received by the mobile telecommunication device. The firewall system comprises an analyzing means for checking at least one characteristic parameter of the message, and a filtering means for preventing the message of being used by a subscriber of the mobile telecommunication device in case the at least one characteristic parameter does not satisfy to one or more conditions.

## Description

### Field of the invention

The invention relates to a mobile telecommunication device (mobile phone, personal digital assistant with mobile telecommunication capabilities) protecting its subscriber against the reception of unsolicited message (SMS, MMS, EMS...messages).

### Background of the invention

The success of Short Messages (SMS) or Multimedia messages (MMS) or Enhanced Messages (EMS) in the world is real. With that success, the abuse of that mean to send unexpected messages to mobile phone subscribers is arriving more and more.
One receive advertisements via SMS for example or messages from unknown origin. Mobile phone are not able to avoid subscribers of being bothered with unsolicited messages. Thus, there is an un-addressed need from mobile telecommunication device subscribers and telecommunication networks operators.

### Object and summary of the invention

Therefore it is an object of the present invention to provide a method and system that overcomes the at least one shortcoming of the prior art system.
One object of the invention is to help a mobile subscriber to filter messages coming from unexpected origin or that do not fulfil some content conditions.

This can be implemented by a "firewall" system on the mobile telecommunication device or in the subscriber identity module (SIM) inserted in the mobile telecommunication device.

The firewall system is especially well adapted for SMS messages. But, more generally the invention concerns firewall system for any other type of message that a mobile can receive. The message can be, for example, a text-message, a sound-message, an image-message or more generally a multimedia message.

The invention is especially well adapted for mobile phone. But, more generally, the invention can be easily adapted for protecting any other type of portable device arranged to receive messages, for example, a personal digital assistant (PDA) or a laptop computer with mobile telecommunication capabilities.

### Detailed description of the invention

A subscriber identity module SIM is a smart card that contains user account information and that enables a user to access services of a telecommunication network when inserted into a mobile telecommunication device. According to the invention, the SIM comprises a firewall system for screening the messages received by the mobile telecommunication device. The firewall system comprises an analyzing means for checking at least one characteristic parameter of the message, and a filtering means for preventing the message of being used by a subscriber of the mobile telecommunication device in case the at least one characteristic parameter does not satisfy to one or more conditions.
It is understood that the term "use" in relation with a message means either displaying the message on the mobile telecommunication device display, or executing the message in case the message contains a particular syntax together with an applet which is caused to be executed when received by said device (typically used by telecommunication operator to update software loaded on the mobile telecommunication device).

The firewall system can be implemented in both hardware and software, or a combination of both. The firewall system is designed so that all messages entering the mobile telecommunication device pass through the firewall system. The firewall system examines each message and prevents those that do not meet the specified criteria or conditions to be further displayed or executed on the mobile telecommunication device.

The specified criteria or conditions are based on user-defined rules. This filtering has the advantage of being very effective and transparent to users.

The characteristic parameter of the message which is check can be the origin of the message. It can also be a string of characters or a key or a signature present in the message.

Advantageously, the characteristic parameters are stored in a specific memory of the SIM.

The conditions for filtering message can be either the presence of the characteristic parameter in the message, or the absence of the characteristic parameter in the message depending of what need to be achieved.

Advantageously, a human interface is proposed to the mobile user to setup his firewall:
- activate/deactivate the message filtering,
- accept only messages from known origin (for which the origin address exists in the personal phone book),
- refuse messages that come from a black list file,
- refuse messages that do not start with / contain a particular string of characters,
- refuse messages that are not part of a chat room list.

Also, the human interface can be used to setup chat service used in connection with mobile telecommunication device, and with the invention to limit the chat service to private chat service, by setting up:
- create a new chat room (a chat room is identified by a private key) and while logged in that chat room, all messages are automatically signed before sending to the destination,
- select /login a chat room (meaning that all messages sent will be signed),
- deselect a chat room (messages no more signed),
- list the chat rooms of each user,
- delete a chat room.

The firewall system will perform all necessary checks on the incoming messages at reception, and will delete all the messages that the mobile subscriber wants to reject.
In the case of the chat room, the verification of the signature will be done, and only messages correctly signed will be kept.
The organization of the messages by chat room is also possible to ease the reading of the messages.

Advantageously, in aim to detect spamming, a mechanism, which is arranged to count the number of messages rejected can be added.

With the invention, the end user is no more polluted by unexpected messages. Nevertheless, the mobile telecommunication operator is still billing the originator of the messages, thus avoiding any loss of revenue.

The invention was presented in relation with a firewall system being integrated in the SIM. However, it is also possible to design a firewall system being directly integrated in the mobile telecommunication device, in particular in case the mobile telecommunication device does not have a SIM (e.g. CDMA technology).

## Claims

1. A Subscriber Identity Module adapted to be inserted into a mobile telecommunication device, **characterized in that** it comprises a firewall system for screening the messages received by the mobile telecommunication device, said firewall system comprising :
- an analyzing means for checking at least one characteristic parameter of the message, and
- a filtering means for preventing the message of being used by a subscriber of the mobile telecommunication device in case the at least one characteristic parameter does not satisfy to one or more conditions.

2. A Subscriber Identity Module as recited in claim 1, wherein the characteristic parameter of the message is the origin of the message.

3. A Subscriber Identity Module as recited in claim 1, wherein the characteristic parameter of the message is a string of characters present in the message.

4. A Subscriber Identity Module as recited in claim 1, wherein the characteristic parameter of the message is a key or a signature.

5. A Subscriber Identity Module as recited in one of the claims 1 to 4, wherein the at least one characteristic parameter is stored in a specific memory.

6. A Subscriber Identity Module as recited in claim 1, wherein one condition is the presence of the characteristic parameter in the message.

7. A Subscriber Identity Module as recited in claim 1, wherein one condition is the absence of the characteristic parameter in the message.

8. A Subscriber Identity Module as recited in one of the previous claims, wherein the message is a text type message.

9. A Subscriber Identity Module as recited in one of the claims 1 to 7, wherein the message is a multi-media type message.

10. A mobile telecommunication device comprises a firewall system for screening the messages received by the mobile telecommunication device, said firewall system comprising :
- an analyzing means for checking at least one characteristic parameter of the message, and
- a filtering means for preventing the message of being used by a subscriber of the mobile telecommunication device in case the at least one characteristic parameter does not satisfy to one or more conditions.

11. A mobile telecommunication device as recited in claim 10, wherein the characteristic parameter of the message is a string of characters present in the message.

12. A mobile telecommunication device as recited in claim 10, wherein one condition is the presence or the absence of the characteristic parameter in the message.
